# EUROPEAN PATENT SPECIFICATION

(11) **EP 2 743 388 B1**
(45) Date of publication and mention of the grant of the patent: **05.08.2020**
(21) Application number: 12822798.0
(22) Date of filing: 22.06.2012
(51) Int. Cl.: D04H 1/485, D04H 1/425, D06M 11/05, D06M 11/84, D21H 11/12, D21H 11/18, D21H 13/10, D21C 5/00, D01B 1/24, D01B 1/26, D01B 1/28, D01B 1/42, D01G 9/02, D04H 1/04, D04H 1/06, D04H 1/542, D04H 1/732, B60R 13/02

(54) **FIBER BOARD AND METHOD FOR PRODUCING SAME**
FASERPLATTE UND VERFAHREN ZU IHRER HERSTELLUNG
PANNEAU DE FIBRES ET PROCÉDÉ DE PRODUCTION DE CELUI-CI

(30) Priority: 08.08.2011 JP 2011173381
(43) Date of publication of application: 18.06.2014
(73) Proprietor: Toyota Boshoku Kabushiki Kaisha, Kariya-shi, Aichi 448-8651 (JP)
(72) Inventor: TAKAGI, Katsuhiro, Kariya-shi Aichi 448-8651 (JP)
(74) Representative: TBK
(86) International application number: PCT/JP2012/066067
(87) International publication number: WO 2013/021741

(56) References cited:
- WO-A2-2007/001072
- CA-A1- 961 282
- FR-A- 733 313
- GB-A- 485 913
- JP-A- H09 191 763
- JP-A- 2004 091 975
- JP-A- 2005 206 954
- JP-A- 2008 531 325
- JP-A- 2009 179 895
- JP-A- 2011 006 807
- JP-A- 2011 032 626
- JP-U- 55 030 758
- US-A- 2 516 384
- US-B1- 6 360 478
- US-B1- 6 413 362

## Description

### [FIELD OF THE INVENTION]

The present invention relates to a fiber board and a method for producing the same. More specifically, the invention relates to a fiber board that has crimped vegetable fibers and a thermoplastic resin binding the vegetable fibers, shows a small variation in basis weight, and is homogenous, and a method for producing a fiber board that can easily produce such a fiber board utilizing a normal fiber board production process.

### [BACKGROUND ART]

A fiber board produced using natural fibers and thermoplastic resin fibers is known as a fiber board used for a vehicular member such as an automotive door trim. Such a fiber board is normally produced by entangling a mixture of natural fibers and thermoplastic resin fibers, and compression-molding the mixture. For example, natural fibers and thermoplastic resin fibers are supplied to a conveyer of an air-laying apparatus, and subjected to an entangling process, a hot pressing process. Such a fiber board is required to show a small variation in basis weight and be homogenous. However, a fiber board produced by a related-art method shows a variation in basis weight (see, Patent Literature 1).

### [PRIOR ART LITERATURE]

### [PATENT LITERATURE]

Patent Literature 1 : JP A 2004-91975

WO 2007/001072 A2 relates to a filter material used, for example, as an air filter for an engine fabricated by mixing first fibers of natural fibers having a fiber diameter of 10 to 40µm, and second fibers of crimped natural fibers having a fiber diameter of 10 to 40µm, and third fibers of fibers having a fiber diameter of 5 to 10µm, The first to third fibers are mixed at a mix ratio of 10 to 30% by mass, 40 to 80% by mass, and 10 to 30% by mass, respectively.

JP H09 191763 A discloses parameters of fibers for providing vegetational basements for lawn grass vegetating on outdoor playgrounds, golf courses ect., comprising fibers 2 of a thermoplastic synthetic polymer having 0,1-1,5mm diameter and containing 30-90wt.% crimped staple fibers having one or more looped crimps in each of the fibers 2 and 70-10wt.% cellulosic crimped staple fibers having one or more looped crimps in each thereof. The fibers are bonded to 70-95% void ratio.

JP 2009 179895 A teaches a method for producing a fiber composite article in which foamed polymer capsules are dispersed between vegetable fibers bound with a thermoplastic resin to be excellent in lightness and rigidity. First a web-forming process for forming a first web having vegetable fibers and thermoplastic resin fibers; a second web-forming process for forming a second web having vegetable fibers and thermoplastic resin fibers; a laminated web-forming process for arranging a capsule-carrying sheet having the first resin layer including a thermoplastic resin, the second resin layer including the thermoplastic resin, and thermally expandable capsules nipped between these layers, between the first web and the second web; an interlacing process for interlacing the laminated web; a melting process for heating the interlacing product to melt the thermoplastic resin in the first web and the thermoplastic resin in the second web; and an expansion process for heating the interlaced product to expand the thermally expandable capsules.

JP 2011 032626 A discloses a method for producing a fiber molded body includes molding a laminated web 9 containing a plant fiber (kenaf fiber or the like) and a thermoplastic resin fiber (polypropylene fiber or the like), then molding a fiber mat 13 by needling the laminated web, subsequently heat-compressing the fiber mat to mold the molded body. In molding the web, a heat-expandable capsule blend in which heat-expandable capsules are blended with the thermoplastic resin (polypropylene resin or the like) together with the plant fibers and the thermoplastic resin fibers.

GB 485 913 A discloses a process for the preliminary treatment of Kapok which consists in hot dipping or soaking the Kabok and then oiling or greasing the Kapok in the cold state following by drying at a moderate temperature. The hot dipping or soaking may for instance be effected in a bath containing from 3 to 5 gr. of trisodium phosphate per litre, to which has been added a wetting agent known on the market, such as the product known under the name of "Astrolane".

US 2 516 384 A relates to the mechanical processing of wood pulp to produce useful modifications of its properties i.e. to a papermaking process. The method of carrying out is shown diagrammatically in Fig. 4 of D6 in which 3 is a small block, sectioned in part to show the disposition of nodules beneath it, covered with rough canvas 4' and resting on nodules 2 which lie upon a second piece of rough canvas 4 tacked to a table top T. The method is performed when the block is pressed down firmly upon the nodules and given an oscillatory motion such that any point on the block, as the point 6, follows a closed path, as indicated by the curved arrow, in a plane parallel to the table top whereby light crumbling or kneading of the dewatered lump of pulp. In fact, a break up of the rolled aggregates, with the consequent re-orientation of the nodules, my take place when the aggregates are re-grouped between successive rotating actions in cycle.

### [SUMMARY OF THE INVENTION]

### [PROBLEMS THAT THE INVENTION IS TO SOLVE]

The invention was conceived in view of the above situation. The object of the present invention is to provide a fiber board that has crimped vegetable fibers and a thermoplastic resin binding the vegetable fibers, shows a small variation in basis weight, and is homogenous, and a method for producing a fiber board that can easily produce such a fiber board utilizing a normal fiber board production process.

### [MEANS FOR SOLVING PROBLEMS]

The object is solved by the fiber board according to claim 1 and the production method according to claim 3. The present invention is as follows.

### [EFFECT OF THE INVENTION]

In the fiber board of the present invention, the vegetable fibers are crimped, and a web in which the vegetable fibers and the thermoplastic resin fibers are sufficiently dispersed is formed. Therefore, a homogenous fiber mat can be obtained using the web, and a fiber board that shows a small variation in basis weight, and is homogenous can be obtained using the fiber mat.

In the case where at least one of the thermoplastic resin fibers is crimped, the thermoplastic resin fibers can be uniformly mixed with the crimped vegetable fibers, and a fiber board that shows a smaller variation in basis weight, and is more homogenous can be obtained.

The production method of a fiber board of the present invention needs a process that crimps vegetable fibers, but the present method can easily produce a fiber board that shows a small variation in basis weight, and is homogenous utilizing a normal fiber board production process without requiring a specific operation and equipment.

In the case where at least one of the thermoplastic resin fibers is crimped, the thermoplastic resin fibers can be easily and uniformly mixed with the crimped vegetable fibers. This makes it possible to produce a fiber board that shows a smaller variation in basis weight and is more homogenous.

In the case where the crimping method is conducted by supplying the raw material fiber to an apparatus having a container and a rotor blade disposed in the container, and then stirring the raw material fibers using the rotation of the rotor blade, the vegetable fibers can be more easily and sufficiently crimped using a simple apparatus and operation.

### [BRIEF DESCRIPTION OF THE DRAWINGS]

Fig. 1 is a schematic view illustrating a crimped vegetable fiber.
Fig. 2 is a schematic enlarged view illustrating part of the vegetable fiber shown in Fig. 1, wherein the vegetable fiber is fibrillated.
Fig. 3 is a schematic enlarged view illustrating another part of the vegetable fiber shown in Fig. 1, wherein the fibril shown in Fig. 2 is wound around a stem fiber.
Fig. 4 is a schematic diagonal view illustrating a sheet-shaped fiber board that shows a smaller variation in basis weight and is more homogenous.
Fig. 5 is a schematic cross-sectional view illustrating a crimping apparatus that includes a container and a rotor blade, and is used to crimp vegetable fibers.
Fig. 6 is a schematic diagonal view illustrating a related-art sheet-shaped fiber board that shows a large variation in basis weight (i.e., an area A having a high basis weight and an area B having a low basis weight are present), and is not homogenous.

### [DESCRIPTION OF EMBODIMENTS]

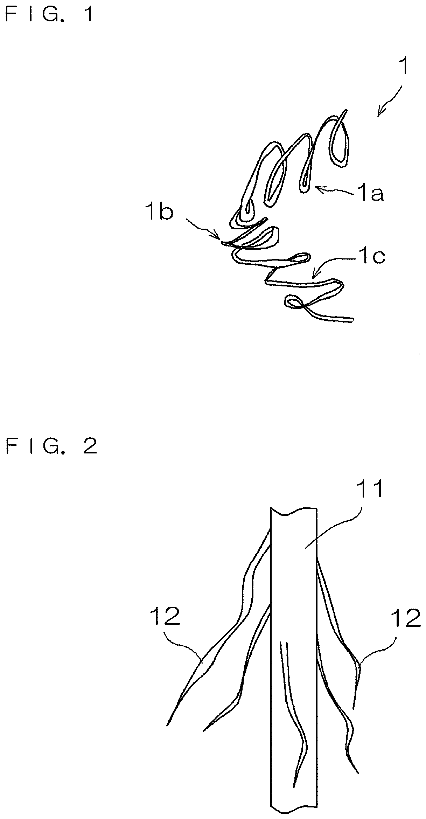

Hereinafter, the present invention is described in detail using Figs. 1 to 5. The particulars shown herein are by way of example and for purposes of illustrative discussion of the embodiments of the present invention only and are presented in the cause of providing what is believed to be the most useful and readily understood description of the principles and conceptual aspects of the present invention. In this regard, no attempt is made to show structural details of the present invention in more detail than is necessary for the fundamental understanding of the present invention, the description is taken with the drawings making apparent to those skilled in the art how the forms of the present invention may be embodied in practice.

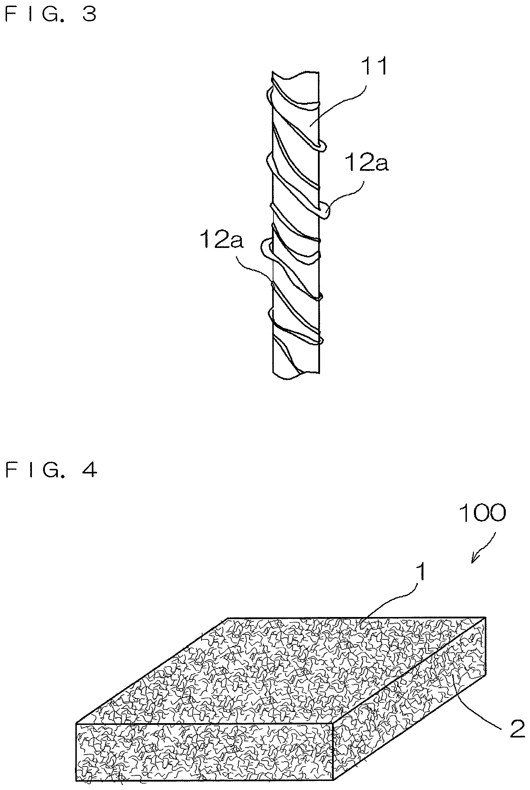

The fiber board 100 of the present invention is obtained by mixing vegetable fibers and thermoplastic resin fibers to form a web, entangling mixed fibers that constitute the web to form a fiber mat, and compressing the fiber mat with heating (see Fig. 4). The vegetable fiber 1 is crimped in advance by stirring a raw material fiber in the presence of water (see Figs. 1 to 3).

The production method of a fiber board of the present invention includes a web-forming process in which vegetable fibers and thermoplastic resin fibers are mixed to form a web, a mat-forming process in which mixed fibers that constitute the web are entangled to form a fiber mat, and a board-forming process in which the fiber mat is compressed with heating. The vegetable fibers used are obtained by a crimping method in advance in which raw material fibers are stirred in the presence of water (see Figs. 1 to 3).

### 1. Vegetable fiber

The vegetable fiber 1 is a crimped fiber obtained by a crimping method in advance in which a raw material fiber is stirred in the presence of water. The shape of the vegetable fiber 1 is not particularly limited as long as the vegetable fiber 1 is a crimped fiber. The vegetable fiber 1 has a complex shape, and includes a part that forms a spiral, a part that is bent, a part that extends almost linearly. As illustrated in Fig. 1, the vegetable fiber 1 normally includes at least one part la that forms a spiral, at least one part 1b that is bent, and at least one part 1c that extends almost linearly when observed macroscopically (e.g., when observed with the naked eye). Therefore, the vegetable fiber 1 has an infinite complex shape.

When the vegetable fiber 1 that is crimped by stirring the raw material fiber in the presence of water is observed microscopically (e.g., observed using an electron microscope), the vegetable fiber 1 has a microscopic structure as illustrated in Figs. 2 and 3. Specifically, the vegetable fiber 1 is fibrillated, and has an area in which a fibril 12 branches from the circumferential surface of a stem fiber 11 (see Fig. 2). The vegetable fiber 1 also has an area in which a fibril 12 is irregularly wound around a stem fiber 11 (see Fig. 3) (i.e., the fibril 12 twines around the stem fiber 11 in a state in which the fibril 12 comes in contact with, or is separated from, the circumferential surface of the stem fiber 11 (see fibril 12a that twines around the stem fiber)). The vegetable fiber 1 also has an area in which the stem fiber 11 remains unfibrillated. The vegetable fiber 1 generally has an approximately linear part and an arcuate part. It is considered that stress is applied to a plurality of areas of the stem fiber 11 in a dispersed state due to the fibril 12 that is irregularly wound around the stem fiber 11, whereby crimps form.

The crimping degree of the vegetable fiber 1 has a stretch elongation ratio measured in accordance with JIS L 1013 in the range from 2% to 30%, and particularly from 15% to 25%. When the crimping degree is within the above range, it is possible to obtain a fiber board 100 that shows a small variation in basis weight. The thermoplastic resin fiber may also be a crimped fiber. In this case, it is preferable that the difference in crimping degree between the vegetable fiber 1 and the thermoplastic resin fiber is small. The difference in crimping degree between the vegetable fiber 1 and the thermoplastic resin fiber (i.e., the difference (%) in stretch elongation ratio between the vegetable fiber 1 and the thermoplastic resin fiber) is preferably 10% or less. When the difference in crimping degree between the vegetable fiber 1 and the thermoplastic resin fiber is small, the vegetable fiber 1 and the thermoplastic resin fiber can be more uniformly mixed, and a more homogeneous fiber board 100 can be obtained.

### 2. Crimping method

The crimping method is not particularly limited as long as the raw material fibers are stirred in the presence of water. The expression "stirring of the raw material fibers in the presence of water" refers to stirring of the raw material fibers that contain water, or stirring of the raw material fibers which contain water and to which water adheres. The expression "stirring of the raw material fibers in the presence of water" also refers to stirring of the raw material fibers that are allowed to contain water after drying, or stirring of the raw material fibers which are caused to contain water and to which water is caused to adhere after drying. The expression "stirring of the raw material fibers in the presence of water" also refers to stirring of the dried raw material fibers while spraying water to the raw material fibers, for example.

The water content in the raw material fibers is adjusted depending on the type of the raw material fibers, but is normally in the range from 20% to 80% by mass, and preferably from 40% to 60% by mass based on 100% by mass of the total amount of the raw material fibers and water. The raw material fibers can be crimped when the water content is within the above range. If the water content in the raw material fibers is insufficient, it is preferable to allow water to adhere to the raw material fibers. The amount of water that is caused to adhere to the raw material fibers is adjusted depending on the type of the raw material fibers, but is preferably in the range from 30 to 120 parts by mass, and more preferably from 60 to 90 parts by mass based on 100 parts by mass of the raw material fibers. When the amount of water that adheres to the raw material fibers is in the range from 30 to 120 parts by mass, vegetable fibers having a sufficient crimping degree can be efficiently obtained. When spraying water to the dried raw material fibers, for example, the mass ratio of the raw material fibers to water may be determined in the same manner as the case of causing water to adhere to the raw material fibers. It is unnecessary to allow an excessive amount of water to be present when stirring the raw material fibers.

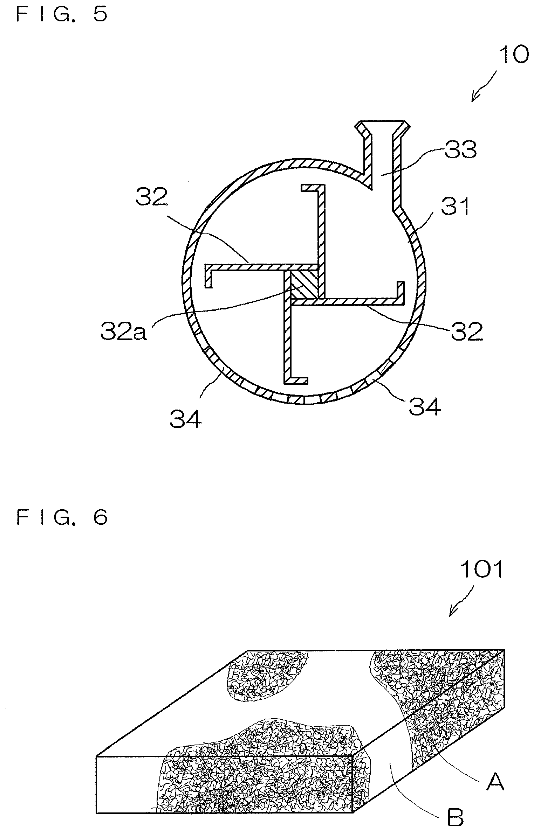

An apparatus used when stirring the raw material fibers in the presence of water is not particularly limited. For example, a crimping apparatus 10 illustrated in Fig. 5 may be used. The crimping apparatus 10 includes a cylindrical container 31 (main body), and rotor blades 32 that are rotated inside the cylindrical container 31 while being supported by a rotary shaft 32a. A raw material fiber inlet 33 is provided in the side area of the upper part of the cylindrical container 31. Water discharge holes 34 are formed in the bottom area of the cylindrical container 31 normally within the range of about 1/3rd of the cylindrical container 31 in the vertical direction.

It is preferable that the raw material fiber inlet 33 is provided over approximately the entirety of the cylindrical container 31 in the lengthwise direction. In this case, the raw material fiber inlet 33 may be continuously formed over approximately the entirety of the cylindrical container 31 in the lengthwise direction, and have a rectangular cross-sectional shape. The raw material fiber inlet 33 may be a plurality of raw material fiber inlets 33 that are intermittently provided over approximately the entirety of the cylindrical container 31 in the lengthwise direction. The water discharge holes 34 are normally evenly formed in the bottom area of the cylindrical container 31. The water discharge holes 34 may optionally be unevenly formed in the bottom area of the cylindrical container 31.

When the raw material fibers are crimped using such a crimping apparatus, the crimping degree can be adjusted by changing the amount of water relative to the raw material fibers, the operating conditions and the structure of the apparatus. The amount of water may be larger than the above range. When a large amount of water is present, the raw material fibers can be sufficiently washed while sufficiently loosening and crimping the raw material fibers. The crimping efficiency is decreased if the amount of water is too large. Therefore, the amount of water is preferably adjusted to a range from 20 to 200 parts by mass (more preferably from 30 to 90 parts by mass) based on 100 parts by mass of the raw material fibers. The raw material fibers can be sufficiently loosened and crimped when using the raw material fibers which contain water and to which water adheres. The raw material fibers can also be sufficiently loosened and crimped even when the amount of water is relatively small by stirring the raw material fibers while spraying water to the dried raw material fibers, for example.

The crimping degree can also be adjusted by selecting the operating conditions and the structure of the apparatus (e.g., the rotational speed and the structure of the rotor blades 32). In this case, it is disadvantageous to change the structure of the apparatus (e.g., the structure of the rotor blades 32) from the viewpoint of cost. Therefore, it is preferable to adjust the crimping degree by changing the operating conditions of the apparatus (e.g., the rotational speed of the rotor blades 32). More specifically, the crimping apparatus 10 illustrated in Fig. 5 may be used to wash the raw material fibers. In this case, vegetable fibers 1 having a higher crimping degree can be obtained by increasing the rotational speed of the rotor blades 32 by a factor of 1.2 to 1.8 (preferably 1.4 to 1.6) as compared with the case of operating the crimping apparatus 10 to only wash the raw material fibers (e.g., increasing the rotational speed of the rotor blades 32 to 1,200 rpm from 800 rpm).

### 3. Raw material fiber of vegetable fiber

The raw material fiber may be a fiber in a plant such as kenaf, jute hemp, manila hemp, sisal hemp, gampi, Mitsumata, Kozo, banana, pineapple, coconut, corn, sugarcane, bagasse, palm, papyrus, reed grass, esparto, Sabi grass, oat, rice plant, bamboo, various conifer trees (Japanese cedar, Japanese cypress, and others), broad leaf tree and cotton. The vegetable fiber may be used singly or in combination of two or more types thereof. The raw material fiber is preferably a fiber in kenaf. The kenaf is a very fast growing annual grass and has excellent absorbitity of carbon dioxide so that it can contribute to reducing an amount of carbon dioxide in the air, thus effectively utilizing forest resources and others. The moiety of a plant that is used for the vegetable fiber is not particularly limited, but may be any moiety that constitutes the plant as far as the fiber can be collected therefrom; examples of the moiety include a non-woody moiety, a stalk moiety, a root moiety, a leaf moiety and a woody moiety.

The kenaf is an easy-growing annual grass having a woody stem and a plant classified into malvaceae in the present invention. The kenaf includes hibiscus cannabinus and hibiscus sabdariffa of scientific names, and further includes Indian hemp, Cuban kenaf, kenaf, roselle, mesta, bimli hemp, ambary hemp, Bombay hemp. When using fibers derived from kenaf as the raw material fibers, outer layer part called as "jinpi" that has a strong bast fiber may be used. It is also preferable to use fibers derived from jute hemp as the raw material fibers. Examples of jute hemp include plants that belong to the Tiliaceae family (e.g., Corchorus capsularis L.).

The length of the raw material fiber to be crimped is normally 10 mm or longer. When the length of the raw material fibers is 10 mm or longer, it is possible to obtain a fiber board that exhibits excellent mechanical properties (e.g., high bending strength and flexural modulus). The length of the raw material fiber is preferably in the range from 10 to 150 mm, and more preferably from 20 to 100 mm. The length of the raw material fiber is measured in accordance with JIS L 1015 (direct method) in a state in which the raw material fiber extends linearly without being stretched. The diameter of the raw material fiber is normally 1 mm or shorter. When the diameter of the raw material fibers is 1 mm or shorter, it is possible to obtain a fiber board that exhibits high bending strength. The diameter of the raw material fiber is preferably in the range from 0.01 to 1 mm, and more preferably from 0.05 to 0.7 mm. The diameter of the raw material fiber is determined by measuring the diameter of the center area of the raw material fibers (for which the length is measured) in the lengthwise direction using an optical microscope.

The average length and average diameter of the raw material fibers are not particularly limited. The average length of the raw material fibers is preferably 100 mm or shorter (normally 10 mm or longer). When the raw material fibers having an average length of 100 mm or shorter are used, a homogeneous web containing the raw material fibers and the thermoplastic resin fibers can be easily formed. The average length of the raw material fibers is determined by measuring lengths of two hundred randomly selected raw material fibers in accordance with JIS L 1015 (direct method) in a state in which each raw material fiber extends linearly without being stretched, and calculating the average value. The average diameter of the raw material fibers is preferably 1,000 µm or shorter (normally 10 µm or longer). The average diameter of the raw material fibers is determined by measuring the diameters of the center area (in the lengthwise direction) of two hundred randomly selected raw material fibers using an optical microscope, and calculating the average value.

Carbon fibers, glass fibers may be used in combination with the vegetable fibers in a mixed state depending on the desired performance. In this case, the bending strength of the fiber board can be further improved. Carbon fibers, glass fibers are preferably used in an amount of 200 parts or less by mass (more preferably 100 parts or less by mass) based on 100 parts by mass of the vegetable fibers.

### 4. Thermoplastic resin fiber

The thermoplastic resin fiber is not particularly limited. Fibers formed of various thermoplastic resins may be used. Examples of the thermoplastic resin include a polyolefin resin such as polypropylene, polyethylene, and an ethylene propylene copolymer; an aliphatic polyester resin such as poly lactic acid, polycaprolactone, and polybutylene succinate; an aromatic polyester resin such as polyethylene terephthalate, polytrimethylene terephthalate, and polybutylene terephthalate; a polystyrene-based resin such as polystyrene, AS resin, and ABS resin; an acrylic resin such as poly(methyl methacrylate); a polyamide resin; a polycarbonate resin; a polyacetal resin.

The thermoplastic resin may be modified in order to improve the affinity to the surface of the vegetable fibers. Two or more thermoplastic resins may be used in combination as long as the fibers can be spun. Only one thermoplastic resin is normally used.

The preferable thermoplastic resin fiber is a polyolefin resin fiber and/or polyester resin fiber. More preferable is a polyolefin resin fiber.

The polyolefin resin used for the polyolefin resin fiber may be an unmodified polyolefin resin, or may be a modified polyolefin resin. A propylene-based polymer such as a propylene homopolymer, an ethylene propylene random copolymer, and an ethylene propylene block copolymer is preferable as the unmodified polyolefin resin.

A copolymer of propylene and ethylene and/or an α-olefin having 4 to 20 carbon atoms is preferable as the copolymer. Examples of the α-olefin include 1-butene, 1 -pentene, 1-hexene, 1-heptene, 1-octene, 4-methylpentene-1, 4-methylhexene-1, 4,4-dimethylpentene-1. A propylene homopolymer is preferable as the propylene-based polymer. A modified polyolefin resin that is modified with a carboxylic acid or an acid anhydride may be used as the modified polyolefin resin.

An unmodified resin and a modified resin may be used in combination.

The polyester resin used for the polyester resin fiber is preferably an aliphatic polyester resin that exhibits biodegradability. Examples of the aliphatic polyester resin that exhibits biodegradability include a hydroxycarboxylic acid-based aliphatic polyester resin (e.g., a homopolymer of a hydroxycarboxylic acid (e.g., lactic acid, malic acid, glucose acid, and 3-hydroxybutyric acid) and a copolymer of two or more acids), a caprolactone-based aliphatic polyester resin (e.g., polycaprolactone and a copolymer of at least hydroxycarboxylic acid and caprolactone), a dibasic acid polyester resin (e.g., polybutylene succinate, polyethylene succinate, and polybutylene adipate).

The length of the thermoplastic resin fiber is normally 10 mm or longer. When the length of the thermoplastic resin fibers is 10 mm or longer, the thermoplastic resin fibers are sufficiently entangled, and the thermoplastic resin fiber and the vegetable fiber are easily entangled, so that a fiber board that exhibits higher bending strength can be obtained. The length of the thermoplastic resin fiber is preferably in the range from 10 to 150 mm, and more preferably from 20 to 100 mm. The length of the thermoplastic resin fiber may be measured in the same manner as that of the vegetable fiber. The diameter of the thermoplastic resin fiber is normally in the range from 1 to 1,500 µm. When the diameter of the thermoplastic resin fiber is in the range from 1 to 1,500 µm, the thermoplastic resin fibers are not cut when forming a web, and a web in which the thermoplastic resin fibers and the vegetable fibers are uniformly mixed can be obtained. The diameter of the thermoplastic resin fiber is preferably in the range from 5 to 700 µm, and more preferably from 8 to 500 µm. The diameter of the thermoplastic resin fiber may be measured in the same manner as that of the vegetable fiber.

The average length and average diameter of the thermoplastic resin fibers are not particularly limited. The average length of the thermoplastic resin fibers is preferably 100 mm or shorter (normally 10 mm or longer). When the thermoplastic resin fibers having an average length of 100 mm or shorter are used, a homogeneous web containing the thermoplastic resin fibers and the vegetable fibers can be easily formed. The average length of the thermoplastic resin fibers may be measured in the same manner as that of the vegetable fibers. The average diameter of the thermoplastic resin fibers is preferably 100 µm or shorter (normally 1 µm or longer). The average diameter of the thermoplastic resin fibers may be measured in the same manner as that of the vegetable fibers.

The shape of the thermoplastic resin fiber is not particularly limited. The thermoplastic resin fiber may have a linear shape, a curved shape, a spiral shape. It is preferable that at least one of the thermoplastic resin fibers is a crimped fiber in order to sufficiently entangle the thermoplastic resin fibers and the vegetable fibers (crimped fibers) when forming a fiber mat. The ratio of the crimped fibers in the thermoplastic resin fibers is not particularly limited. The ratio of the crimped fibers is preferably 30% or higher by mass, and more preferably 50% or higher by mass based on 100% by mass of the total amount of the thermoplastic resin fibers. All of the thermoplastic resin fibers may be crimped fibers. The crimping degree of the thermoplastic resin fiber is not particularly limited. The preferable crimping degree of the thermoplastic resin fiber is one having a stretch elongation ratio measured in accordance with JIS L 1013 in the range from 2% to 30%. It is preferable, as mentioned above, that the difference in crimping degree between the thermoplastic resin fibers and the vegetable fibers is small.

The thermoplastic resin fiber is normally formed of a thermoplastic resin containing an additive such as an antioxidant, a plasticizer, an antistatic agent, a flame retardant, an antimicrobial agent, a fungicide, and a coloring agent.

### 5. Production method of fiber board

In the web-forming process, the vegetable fibers and the thermoplastic resin fibers are mixed to form a web. The web may be formed by an arbitrary method. For example, the web may be formed by mixing the vegetable fibers and the thermoplastic resin fibers in a given ratio using a cotton mixer that utilizes a dry method. Examples of the dry method include an air-laying method and a carding method. The dry method is used for the following reason. Specifically, since the vegetable fibers absorb water, it is necessary to provide an additional process that sufficiently dries the vegetable fibers when using a wet method. The air-laying method is particularly preferable as the dry method. The air-laying method includes supplying a loosened mixture to a conveyer using an air stream, and dispersing and accumulating the mixture to form a web on the conveyer, for example. The air-laying method is suitable for forming a web in which the vegetable fibers and the thermoplastic resin fibers are uniformly dispersed.

The vegetable fibers and the thermoplastic resin fibers may be used in an arbitrary ratio when forming the web. The ratio of the vegetable fibers is preferably in the range from 10% to 95% by mass, more preferably from 20% to 90% by mass, and particularly from 30% to 80% by mass, based on 100% by mass of the total amount of the vegetable fibers and the thermoplastic resin fibers. When the ratio of the vegetable fibers is in the range from 10% to 95% by mass, the vegetable fibers can sufficiently reinforce the fiber board. The basis weight of the web is not particularly limited, but is preferably in the range from 200 to 3,000 g/m², and particularly from 500 to 2,000 g/m². The thickness of the web is not particularly limited, but is preferably in the range from 10 to 700 mm, and particularly from 100 to 500 mm.

In the mat-forming process, the fibers (i.e., vegetable fibers, thermoplastic resin fibers, and vegetable fiber and thermoplastic resin fiber) that form the web are entangled to form a fiber mat. The entangling method is not particularly limited, but a needle punching is normally used. The web may optionally be subjected to a pressuring before needling.

The needling may be performed on one side of the web, or may be performed on each side of the web. It is preferable that needling is performed on each side of the web.

The fiber mat may also be formed using two webs. In the case of a stacked web, the vegetable fibers and the thermoplastic resin fibers can also be sufficiently entangled by needling so that the boundary between the webs is not determined. A homogeneous fiber board can be produced using the resulting fiber mat.

In the board-forming process, the fiber mat is compressed with heating to form a fiber board. The fiber mat after the hot press is cooled while pressuring to form a fiber board having a given shape. In the hot press for the fiber board, the fiber mat is compressed with heating at a temperature at which the thermoplastic resin used to form the thermoplastic resin fibers is melted, and then cooled while pressuring so that a formed (molded) product having a given thickness is obtained. It is possible to improve the wettability of the molten resin to the surface of the vegetable fibers, and sufficiently bond the vegetable fibers by thus compressing the fiber mat with heating, so that a fiber board having a given thickness can be obtained.

The production method of a fiber board of the present invention normally includes a cutting process that cuts the mat to have the desired dimensions, and a trimming process that cuts the mat to have the desired shape, in addition to the web-forming process, mat-forming process, and board-forming process. The method of the invention may further include a pressure-bonding process in which a resin film or an upholstery material is bonded to the fiber board in order to improve the external appearance of a product.

For example, the fiber board may be widely used in a vehicle-related field, a ship-related field, an aircraft-related field, a furniture-related field, or an architecture-related field. The fiber board is particularly suitable as an interior material, an exterior material, a structural material used in the above fields.

Examples of members which are used in vehicle-related fields and to which the fiber board may be applied include a door base material, a package tray, a pillar garnish, a switch base, a quarter panel, an armrest core material, a door trim, a seat structural material, a console box, a dashboard, an instrument panel, a deck trim, a bumper, a spoiler, a cowling. Examples of members which are used in ship-related fields and aircraft-related fields and to which the fiber board may be applied include a package tray, an armrest core material, a seat structural material, a console box, a dashboard, an instrument panel. Examples of members which are used in furniture/architecture-related fields and to which the fiber board may be applied include a mounting material and a structural material for furniture (e.g., desk, chair, shelf, and chest), housing members such as a door mounting material and a door structural material.

The fiber board may also be used as a package, a container (e.g., tray), a protective member, a partition member.

It is noted that the foregoing examples have been provided merely for the purpose of explanation.

While the present invention has been described with reference to exemplary embodiments, it is understood that the words which have been used herein are words of description and illustration.

### [INDUSTRIAL APPLICABILITY]

The fiber board and the production method thereof in the present invention are widely utilized for an interior material in a vehicle-related field, a ship-related field, an aircraft-related field, a furniture-related field, or an architecture-related field.

### [EXPLANATIONS OF NUMERALS]

100, 101: fiber board, A: dense area having high basis weight, B: thin area having low basis weight, 1: vegetable fiber, 1a: part that forms spiral, 1b: part that is bent, 1c: part that extends almost linearly, 11: stem fiber, 12: fibril, 12a: fibril that twines around stem fiber, 2: thermoplastic resin that binds vegetable fibers through melting of thermoplastic resin fibers, 10: crimping apparatus, 31: cylindrical container, 32: rotor blade, 32a: rotary shaft, 33: raw material fiber inlet, 34: water discharge hole.

## Claims

1. A fiber board that is obtained by mixing vegetable fibers and thermoplastic resin fibers to form a web, entangling mixed fibers that constitute said web to form a fiber mat, and compressing said fiber mat with heating,
**characterized in that**
said vegetable fibers are crimped in advance by stirring raw material fibers in the presence of water reaching a crimping degree of the vegetable fiber with a stretch elongation ratio measured in accordance to JIS L 1013 in the range from 2% to 30%.

2. The fiber board according to Claim 1, wherein at least one part of said thermoplastic resin fibers is crimped wherein the difference in crimping degree between the vegetable fiber and the thermoplastic resin is preferably 10% or less.

3. A production method of a fiber board comprising a web-forming process in which vegetable fibers and thermoplastic resin fibers are mixed to form a web, a mat-forming process in which mixed fibers that constitute said web are entangled to form a fiber mat, and a board-forming process in which said fiber mat is compressed with heating, **characterized in that** said vegetable fibers are obtained by a crimping method in advance in which raw material fibers are stirred in the presence of water reaching a crimping degree of vegetable fiber with a stretch elongation ratio measured in accordance to JIS L 1013 in the range from 2% to 30%.

4. The production method of a fiber board according to Claim 3, wherein at least one part of said thermoplastic resin fibers is crimped wherein the difference in crimping degree between the vegetable fiber and the thermoplastic resin fiber is preferably 10% or less.

5. The production method of a fiber board according to Claim 3 or 4, wherein said crimping method is conducted by supplying said raw material fiber to an apparatus having a container and a rotor blade disposed in said container, and then stirring said raw material fibers using the rotation of said rotor blade.

## Patentansprüche

1. Faserplatte, die durch Mischen von Pflanzenfasern und thermoplastischen Harzfasern zur Bildung eines Vlieses, Verschlingen von gemischten Fasern, die das Vlies bilden, zur Bildung einer Fasermatte und Komprimieren der Fasermatte unter Erwärmung erhalten wird,
**dadurch gekennzeichnet, dass**
die Pflanzenfasern im Voraus durch Rühren von Rohmaterialfasern in Gegenwart von Wasser gekräuselt werden, wobei ein Kräuselungsgrad der Pflanzenfaser mit einem nach JIS L 1013 gemessenen Streckdehnungsverhältnis im Bereich von 2% bis 30% erreicht wird.

2. Faserplatte nach Anspruch 1, wobei mindestens ein Teil der thermoplastischen Harzfasern gekräuselt ist, wobei der Unterschied im Kräuselungsgrad zwischen der Pflanzenfaser und dem thermoplastischen Harz vorzugsweise 10% oder weniger beträgt.

3. Verfahren zur Herstellung einer Faserplatte, mit einem Vliesbildungsprozess, bei dem Pflanzenfasern und thermoplastische Harzfasern gemischt werden, um ein Vlies zu bilden, einem Mattenbildungsprozess, bei dem gemischte Fasern, die das Vlies bilden, verschlungen werden, um eine Fasermatte zu bilden, und einem Plattenbildungsprozess, bei dem die Fasermatte unter Erwärmung komprimiert wird, **dadurch gekennzeichnet, dass** die Pflanzenfasern durch ein vorhergehendes Kräuselungsverfahren erhalten werden, bei dem Rohmaterialfasern in Gegenwart von Wasser gerührt werden, wobei ein Kräuselungsgrad der Pflanzenfasern mit einem gemäß JIS L 1013 gemessenen Streckdehnungsverhältnis im Bereich von 2% bis 30% erreicht wird.

4. Verfahren zur Herstellung einer Faserplatte nach Anspruch 3, bei dem mindestens ein Teil der thermoplastischen Harzfasern gekräuselt wird, wobei der Unterschied im Kräuselungsgrad zwischen der Pflanzenfaser und der thermoplastischen Harzfaser vorzugsweise 10% oder weniger beträgt.

5. Verfahren zur Herstellung einer Faserplatte nach Anspruch 3 oder 4, wobei das Kräuselungsverfahren durchgeführt wird, indem die Rohmaterialfaser einer Vorrichtung zugeführt wird, die einen Behälter und ein in dem Behälter angeordnetes Rotorblatt aufweist, und dann die Rohmaterialfasern unter Nutzung der Drehung des Rotorblattes gerührt werden.

## Revendications

1. Panneau de fibres qui est obtenu par mélange de fibres végétales et de fibres de résine thermoplastique pour former une toile, enchevêtrement de fibres mixtes qui constituent ladite toile pour former un mat de fibres, et compression dudit mat de fibres avec chauffage,
**caractérisé en ce que**
lesdites fibres végétales sont crêpées à l'avance par agitation de fibres de matières premières en présence d'eau en atteignant un degré de crêpage des fibres végétales avec un taux d'allongement par étirement mesuré conformément à la norme JIS L 1013 situé dans la plage allant de 2 % à 30 %.

2. Panneau de fibres selon la revendication 1, dans lequel au moins une partie desdites fibres de résine thermoplastique sont crêpées, et dans lequel la différence de degré de crêpage entre les fibres végétales et la résine thermoplastique est de préférence de 10 % ou moins.

3. Procédé de production d'un panneau de fibres comprenant un procédé de formation de toile dans lequel des fibres végétales et des fibres de résine thermoplastique sont mélangées pour former une toile, un procédé de formation de mat dans lequel des fibres mixtes qui constituent ladite toile sont enchevêtrées pour former un mat de fibres, et un procédé de formation de panneau dans lequel ledit mat de fibres est comprimé avec chauffage, **caractérisé en ce que**
lesdites fibres végétales sont obtenues par un procédé de crêpage à l'avance dans lequel des fibres de matières premières sont agitées en présence d'eau en atteignant un degré de crêpage des fibres végétales avec un taux d'allongement par étirement mesuré conformément à la norme JIS L 1013 situé dans la plage allant de 2 % à 30 %.

4. Procédé de production d'un panneau de fibres selon la revendication 3, dans lequel au moins une partie desdites fibres de résine thermoplastique sont crêpées, et dans lequel la différence de degré de crêpage entre les fibres végétales et les fibres de résine thermoplastique est de préférence de 10 % ou moins.

5. Procédé de production d'un panneau de fibres selon la revendication 3 ou 4, dans lequel ledit procédé de crêpage est effectué par fourniture desdites fibres de matières premières à un dispositif ayant un récipient et une lame de rotor disposée dans ledit récipient, et ensuite agitation desdites fibres de matières premières par utilisation de la rotation de ladite lame de rotor.
